Europäisches Patentamt

**European Patent Office**

**Office européen des brevets**

(19)

(11) Publication number: **0 013 867**
A1

## EUROPEAN PATENT APPLICATION

(12)

(21) Application number: **79830044.8**

(22) Date of filing: **19.11.79**

(51) Int. Cl.³: **B 05 C 3/09,** C 03 C 17/00, G 02 C 7/10

(30) Priority: **28.11.78 IT 3625578**
**10.07.79 IT 4971779**

(43) Date of publication of application: **06.08.80**
**Bulletin 80/16**

(84) Designated Contracting States: **AT BE CH DE FR GB LU NL SE**

(71) Applicant: **Grognale, Silvio, Piazza S. Maria delle Grazie 3, Roma (IT)**

(72) Inventor: **Grognale, Silvio, Piazza S. Maria delle Grazie 3, Roma (IT)**

(74) Representative: **Fiammenghi, Carlo et al, Via Quattro Fontane, No. 31, I-00184 Rome (IT)**

(54) **An apparatus for colouring the peripheral position of lenses of spectacles and coloured lenses thus obtained.**

(57) An apparatus for colouring the peripheral edge portion of lenses (7) for spectacles comprising: at least a basket (1) constituted of two side members (12a, 12b) connected to one another by cross bars and carrying longitudinal shafts (17) spaced apart from each other of a distance less that the lens diameter and provided with annular shaped grooves (17a) adapted to receive portions of the peripheral edges of the lenses; means to cause the shafts (17) to rotate in pairs in the same direction with predetermined adjustable speeds; a tank (2) associated with heating and stirring means and containing the dye bath (3); and means for obtaining to and from movements between the basket (1) and the bath (3) of a predetermined, but adjustable value, so as to obtain that the edges of the lenses (7) during their revolving motion about their axes, are dipped into the bath for a predetermined depth.

iMG/lb/844e

- 1 -

## An apparatus for colouring the peripheral portion of lenses of spectacles.

The present invention relates to an apparatus for colouring the peripheral portion of lenses of glasses of spectacles so as to produce two-colour lenses wherein their peripheral band is of a colour or colour shade different from that of the central portion thereof, with a colour intensity which increases from the inner portion of said band to the outer one or vice versa. The invention also concerns the obtained lens.

Lenses or glasses are already known and apparatus for the production thereof which have a colouring which is shaded in vertical direction since said lenses or glasses present stripes of gradually increasing colour intensity arranged in parallel bands, which, when the lenses are mounted, are positioned horizontally. The machines for an industrial production of this kind of lenses or glasses comprise baskets supporting a plurality of glasses mounted in a vertical and fixed position; each basket is hooked to a supporting frame which causes the gradual lowering of this basket into a tank containing the dye bath, this tank being associated with means for keeping the bath in continuous circulation and for maintaining a temperature of about 90°-95°C therein. The basket support member is controlled by means which transmit to the basket a downwards movement and which at the same time induce vertical oscillations so that the different parallel bands of each lens remain in contact with the bath liquid for different time intervals so as to produce coloured bands of graduated colour shades on the lenses or glasses in the direction of the basket dipping.

The present invention aims to produce such a type of lens or glass, which has a peripheral band with a colour intensity which gradually decreases from the periphery towards the inner portion thereof; the central area of said lens may have a colour or colour shade different from that of its peripheral band.
The present invention is particularly adapted to be applied to all the kinds of glasses or spectacles of small or large size, in particular to those which have to be used by the women in summertime for the protection of their eyes from the sun rays, such a peripheral colouring of the lenses enabling to screen the peripheral band of each lens through which could pass the rays dazzling the eye without improving the field of vision. The apparatus for producing the lenses or glasses according to the invention comprises a special basket provided to support a plurality of lenses of a substantially circular shape in plan, and which are supported in a substantially vertical position by means of pairs of longitudinal shaped shafts spaced apart from each other of a distance less than the diameter of the lenses. For such a purpose these shafts have a series of conical annular grooves shaped so as to receive and support the outer convex periphral end portion of the lenses. The shafts are caused to rotate in pairs in the same direction so as to be able to let slowly rotate the series of lenses carried by the various pairs of shafts. The shafts of the basket are caused to rotate by a small electric motor associated with a speed gear so that the lenses can let rotate at one of three or more different speeds.

It is known that the immersion time interval of the lenses into the dye bath depends on the fixing speed of the chosen dye bath.

The basket is associated with a tank containing the dye bath. Means are provided to vary the dipping level of the edge portion of the lenses so as to be able to vary, at will, the width of their treated peripheral band.

According to a well known solution also this bath tank is provided with heating means as well as with stirring means so as to maintain constant in the long run the characteristics of the dye bath.

According to a first embodiment the basket is hung inside a tank containing the dye bath at such a level that the lowermost part of the edge portion of the lenses mounted on a basket is placed in close proximity with the bath surface.

The tank is provided with a discharge orifice extending upwardly above the liquid surface of the tank; to said orifice a pipe is connected through which will be discharged the overflow of the liquid which will be collected into an auxiliary tank positioned at a lower level so as to take advantage that the liquid can fall down into said ausxcilary tank under the effect of the force of gravity. A suction pipe of a pump draws up into the auxiliary tank. This pipe is provided with a valve optionally controlled by a timer or a program control device, the delivery pipe of this pump ending inside the main tank containing the treatment bath. The size of the weir discharge orifice of the main tank and the flow rate of the pump are calculated in such a manner that, when the pump is operative, the liquid level of the bath in the main tank increases slowly, because the delivery of the pump is sligthly greater than the liquid quantity which can be discharged. Accordingly the radial whidth of the peripheral treated band of the lenses is a function of the predetermined maximum level of the bath liquid inside the main tank. As soon as this maximum level has been attained, the liquid flow delivered by the pump is stopped so that the dye bath level gradually begins slowly to decreases and during this second phase another deposit of the dye liquid takes place on the peripheral edge of each lens and therefor a second colouring step occurs which produces the shading effect with a colour shade which increases from the center towards the periphery of the lens since the peripheral portions of all the peripheral bands remain in contact with the dye bath for a longer time than the inner ones. Of course, the control of the valve and/or the pump can be programmed so as to vary the operation time intervals of the pump so as to adjust the maximum bath level and therefore the width of the peripheral coloured band of the lens at will but. Of course, the colouring step can be also repeated two or more times, as darker colour shades are desired or when dye materials having a slower dye effect are used.

According to another embodiment provision is made to use a conventional tank containing the dye bath and to employ a basket dipping system which is carried out by the use of a control mechanism which enables to perform up and down movement of the basket and also to adjust the amplitude and/or speed of its strokes so as to obtain a coloured peripheral band on the lenses of a greater or less radial width or a greater or less colour intensity.

By the use of the apparatus of the invention very high outputs per hour of two-colour lenses or glasses can be obtained which have unchangingly uniform and programmed characteristics. Said lenses can be sunlenses or also coloured lenses adapted to concurrently correct sight defects.

The accompanying drawings show two embodiments of the invention, given merely by way of example without any limitation thereof; in these drawings:

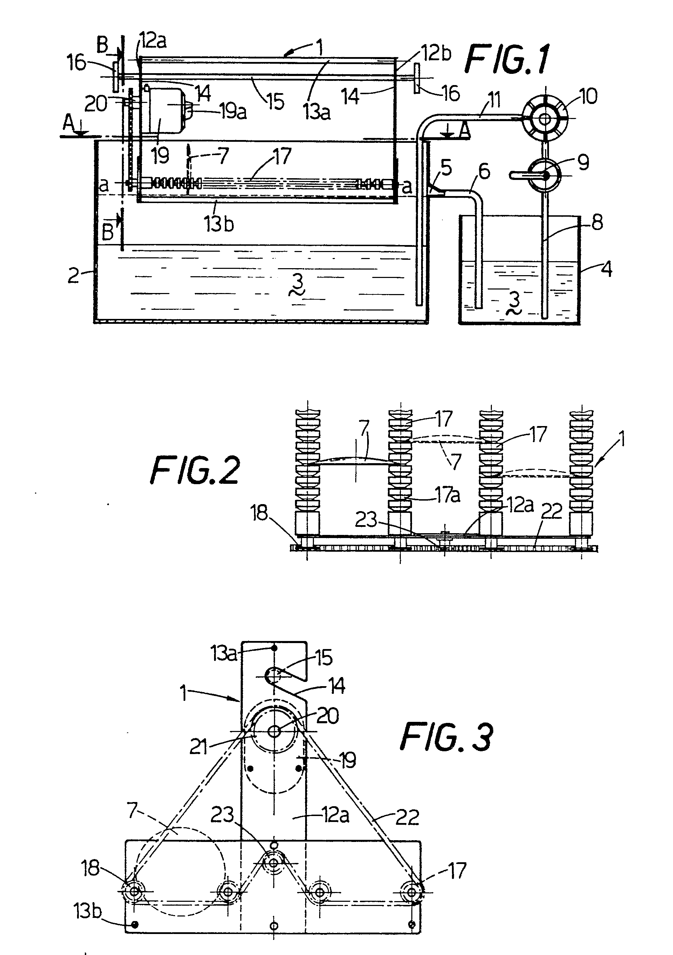

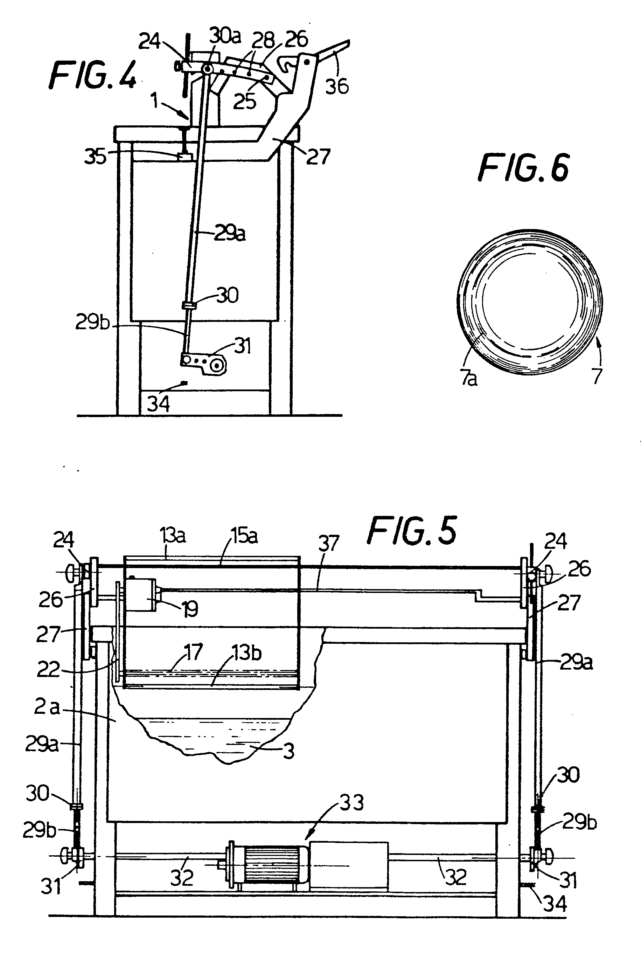

Figure 1 is a diagrammatic partially sectioned front view of a first embodiment of the invention; Figure 2 shows a detail of the horizontal section of the basket taken on line A-A of Figure 1; Figure 3 is the side view taken on line B-B of Figure 1, and viewed in the direction of the arrows at said line; Figure 4 shows a diagrammatic partial side view of the apparatus according to a second embodiment; Figure 5 is the front view of the embodiment shown in Figure 4; and Figure 6 shows the plan view of the obtained lens or glass.

Now referring to the embodiment shown in Figures 1 to 3 the apparatus comprises a basket, generally indicated at 1, a main tank 2 containing a dye bath 3, said tank 2 being associated with heating means adapted to maintain the bath at a temperature of about 90-94°C as well as with stirring means for maintaing the bath in circulation; these means have been not shown since they are well known in the art. At 4 is indicated an auxiliary tank mounted at a level lower than that of the free surface of the liquid 3 into the tank 2. Just over a predetermined level "a" of the liquid 3 in the tank 2 is arranged a weir orifice 5 to which is connected a pipe 6 which ends near the bottom of the tank 4 so that the liquid 3 of the tank 2 which reaches a level higher than the weir level can fall down under the effect of the force of gravity through pipe 6 into the tank 4, which is designed, in its turn, to contain a predetermined quantity of liquid 3. The orifice 5 is of a substantially rectangular shape and of a height higher than the maximum level which has to be attained by the liquid 3 in the tank 2, this maximum level depending on the width of the peripheral coloured band 7a to be obtained on the lenses, generally indicated at 7, as will be therebelow better described, one lens 7 being shown in Figures 1 and 3 and three lenses being shown in Figure 2.

Into the tank 4 and near its bottom opens the pipe 8 which is connected to the suction inlet of the pump 10 and in which is inserted a valve 9. The delivery pipe 11 of the pump 10 ends near the bottom of the tank 2.

The basket 1 comprises two side members 12a, 12b, which

0013867

are connected to one another by at least a longitudinal upper bar 13a and by lower stiffening bars 13b. On the outer upper part of the side members 12a and 12b are arranged hooking recesses 14 for the hooking of the basket 1 to a longitudinal support bar 15 supported by brackets 16 made integral with a support structure. The bar 15 is positioned at such a height that, when the basket 1 is suspended on this bar 15, the lenses 7 carried by said basket 1 have their lowermost edge portions placed inside the tank at the level "a" of the weir or sill of the discharge orifice 5. Of course, the tank 2 and the bar 15 can be designed to carry more than one basket 1 according to the required day's work. Near the lower part of the or each basket 1 between the side members 12a, 12b pairs of parallel shafts are mounted adapted to rotate about their axes, each pair of shafts 17 having their axes spaced apart from each other of a distance less than the diameter of the lenses 7 to be treated. The shafts 17 are provided with a plurality of substantially frusto-conical annular grooves 17a of a radial section similar to a trapezoid having two right angles and the oblique side so shaped as to mate the convex surface of the edge portion of a lens 7, which edge portion is received and supported by the pair of facing coplanar annular grooves 17a of the pair of shafts 17 designed to support a series of lenses 7, causing the rotation thereof. One of the ends of the shafts 17 extend out of the side member 12a and on these end portions of the shafts 17 are keyed toothed pinions 18. At 19 is indicated an electric geared motor energized by low voltage current in order to avoid the risks of electric shocks which can be dangerous for any assistant working in contact with a device which operates into a liquid medium. The speed of the motor 19 can be regulated by means of a handle control 19a so as to permit that the driving shaft 20 rotates at one of three or more different speeds. On the end of the shaft 20 which extends out of the side member 12a is fixedly mounted the pinion 21 meshing with the transmission chain 22, meshing in turn with the pinions 18 as well as with a central tensioning idle pinion 23. Thus, when the motor 19 is energized, the driving shaft 20 through the transmission 21, 22 and 18 causes the shafts 17 to rotate at the speed selected by the handle control 19a, said shafts 17, in turn, causing the rotation of the lenses 7 about their axes, thus causing the whole peripheral edge 7a of each lens 7 to reach the lower portion of the basket and to be dipped inside the bath 3.

In order to carry out the colouring step, the valve 9 opens and the pump 10 is started, which forces a part of the liquid 3 of the tank 4 to pass into the tank 2. The pump 10 is so designed that its delivery be higher than the sill delivery of the bath from the tank 2 through the weir orifice 5. At first, the liquid, fed by the pump 10, serves only to increase the liquid level up to reach the level "a", where the bath 3 begins to lap the lowermost portion of the edge of the revolving lenses 7. Then the bath level begins to raise up to reach the predetermined maximum value; afterwards the valve 9 closes and the pump 10 stops, so that the bath level in the tank 2 begins to slowly decrease up to attain the level "a" so that also during this second phase the dying process continues and that still produces a graduation of the colour intensity which increases proceeding towards the periphery of the lenses 7, on account of the fact that the outermost annular portions of the lenses 7 remain in contact with the bath liquid for a longer time than the inner ones. Of course, this treatment can be repeated several times on a same batch of lenses in order to obtain a stronger colour shade. The pump 10 has not only the main task to vary the bath level but it serves also to co-operate for maintaining the liquid in the best mixed condition in order to attain uniform results.

In the second embodiment (Figures 4 and 5) the basket 1 is identical to the preceding one and will be suspended over a tank 2a which is of a conventional type, i.e. it is provided with heating and mixing means for the dye bath 3. But according to this variant the basket 1 is supported by a bar 15a carried by two identical mechanisms comprising curved arms 24 pivotally mounted about co-axial pins 25 supported by two parallel brackets 26 fixed to the frame 27 of the tank 2a.

Along each arm 24 a series of spaced apart hooking holes 28 are arranged on one of which can be hooked the upper hooked end of a rod consisting of two sections 29a, 29b connected to one another by a threaded joint 30 so as to obtain a rod of an adjustable length. The lower end of each section 29b is pivotally connected to a lever 31 actuated by a driving shaft 32 with the interposition of a unidirectional joint including ratched gear (not shown). The driving shaft 32 is actuated through a reduction gear unit 33. At 34 is indicated a lower limit stop means. It is also provided a upper limit switch 35 while a lever hook 36 serves to lock the basket 1 in its uppermost position acting on the bar 37. Owing to the particular support system of the basket 1 as the motor gear 33 becomes operative, each mechanism including the lever 31, the rod 29a, 29b having an adjustable length and the arm 24 acts as a guiding link system so that a rotation of the lever 31 until its limit stop means 34 causes a downwards movement of the bar 15a of a predetermined stroke which causes the dipping of the lowermost portion of the peripheral edge of the lenses 7 into the bath while these lenses 7 rotate slowly about their axes.

A first adjustment of the width of the coloured peripheral band 7a of the lenses 7 to be coloured can be obtained by duly selecting the pairs of coaxial holes 28, in which the upper sections 29a of the rods 29a, 29b have to be hooked. A precision adjustment can be carried out, varying the length of the transmission rod 29a, 29b by means of the threaded joint 30. The upper limit switch 35 having an adjustable position will cause the motor 33 stops, afterwards the basket 1 will be lifted out of the tank 2a and hooked to the cross bar 37 by suitable means.

0013867

## Claims

1 - An apparatus for colouring the peripheral portion (7a) of substantially circular lenses (7) for spectacles, comprising:

- at least a basket (1) including two side members (12a, 12b) connected to one another by longitudinal bars (13a, 13b) and having, near its lower part, longitudinal shafts (17) having axes laying in a same horizontal plan, the shafts (17) of each pair being spaced apart from each other of a distance less than the diameter of the lenses (7) to be treated, said shafts (17) being provided with a plurality of annular grooves (17a) for receiving and supporting the edges of the lenses (7) in their vertical position, and means for causing the rotation of the shaft (17) in pairs in the same direction with adjustable revolving speeds;

- a tank (2 or 2a) provided with heating and stirring means and containing the dye bath (3); and

- means for performing a relative movement of the basket (1) to and from the bath surface of a predetermined but adjustable distance sufficient in order that the lenses (7) supported by the or each basket (1) during their revolving movement are dipped into the bath (3) for such a depth that a peripheral coloured band be obtained thereon, these lenses (7) having their central portion which has been previously coloured in any other colour or shade colour, or which is not coloured.

2 - An apparatus accordint to claim 1, wherein each basket (1) supports an electric motor (19) energized by low voltage electric current and associated with a gear box so that the driving shaft (20) of said motor can rotate at a speed which can be selected by means of a handle control (19a) the driving shaft (20) of the motor extendind outwardly out of the side member (12a) of the basket (1), where a transmission is provided which comprises:

a toothed gear (21) mounted on the driving shaft (20); a chain (22) meshing with the toothed gear (21) and toothed pinions (18) keyed on the respective outwardly extending ends of the shafts (17) and a tensioning idle pinion (23) which is inserted in the transmission provided to transmit the motion to the shafts (17), which support, in pairs, a series of lenses (7), said shafts (17) having annular grooves (17a) of substantially frusto-conical shape adapted to substantially mate the shape of the peripheral edge portion of the lenses (7) so as to impart to these latter a revolving motion about their axes.

3 - An apparatus according to claim 1, wherein the main tank (2) containing the dye bath (3) has an outlet orifice (5) having a sill edge, which is positioned at the level of the lowermost portions of the peripheral edges of the lenses (7) mounted on each basket (1) which is suspended, in a fixed postion over the bath surface so that these lowermost portions of the lens edges be positioned at the level of the sill, the outlet orifice (5) being of a substantially rectangular shape which has such a height so as to correspond to the maximum level of the liquid (3) of the bath, said outlet orifice (5) being connected by a pipe (6) to an auxiliary tank (4) containing the liquid (3) discharged through the pipe (6) therein, near the bottom of said auxiliary tank (4) being placed the suction orifice of a pipe (8) controlled by a valve (9) and connected with the suction orifice of a pump (10) the delivery pipe (11) of which opens near the bottom inside the tank (2), the delivery rate of the pump (10) being higher than the delivery rate of the liquid flow which can be discharged through the outlet orifice (5) of the tank (2) into the tank (4).

4 - An apparatus according to claim 3 wherein the valve (9) is controlled by a timer or a program control device.

5 - An apparatus according to claim 1, wherein the basket (1) is suspended on a bar (15a) connected to a pair of mechanisms adapted to let the basket (1) to be lowered up to be dipped up to attain a predetermined, but adjustable depth, into the bath (3) in the tank (2a) and adapted to return the basket (1) to its starting position out of the tank (2a), each mechanism comprising a guiding link system (31, 29a, 29b, 24) including a rod of adjustable length and constituted of two sections (29a, 29b) connected by a threaded joint (30), while the arm (24) of each guiding link system has a working length which can be varied by varying the connection point between the rod (29a, 29b) and the arm (24) by providing a series of holes (28) along the arm (24) while the arm (31) of the guiding link system is constituted by a lever arm connected with the driving shaft (32) by the interposition of aunidirectional joint, the lower limit position of the basket stroke being defined by a stop means (34) while a upper limit switch (35) is provided in an adjustable position so as to cause the stopping of the motor (33) actuating said mechanisms and means (36, 37) for locking the basket (1) in its upper limit position.

6 - A lens for spectacles and the like having a substantially circular shaped, the peripheral edge portion of which has a colour shade different and darker that that of the central portion so as to obstruct, at least partially, the passage of the light rays through said coloured peripheral band, where the colour shade decreases from the periphery towards the center.

*FIG.1*

*FIG.2*

*FIG.3*

**FIG.4**

**FIG.6**

**FIG.5**

European Patent Office

**EUROPEAN SEARCH REPORT**

0013867
Application number

EP 79 83 0044

| | DOCUMENTS CONSIDERED TO BE RELEVANT | | CLASSIFICATION OF THE APPLICATION (Int Cl. |
|---|---|---|---|
| Category | Citation of document with indication. where appropriate. of relevant passages | Relevant to claim | |
| | US - A - 4 096 295 (A.M. MARKS)<br>* Column 3, line 56 - column 4, line 4 * | 1,5 | B 05 C 3/09<br>C 03 C 17/00<br>G 02 C 7/10 |
| | FR - A - 1 592 695 (G.M.P. MAUREL)<br>* Whole document * | 1,6 | |
| | FR - A - 1 383 104 (A. MATTEY)<br>* Page 2, right-hand column, above * | 6 | |
| | | | TECHNICAL FIELDS SEARCHED (Int.Cl. |
| | FR - A - 1 176 733 (W. ZICKEN-HEIMER)<br>* Page 1, right-hand column, below * | 6 | B 05 C 3/09<br>3/10<br>3/20<br>C 03 C 17/00<br>G 02 C 7/10<br>B 05 D 1/18 |
| | GB - A - 423 338 (OPTICAL RE-SEARCH)<br>* Page 2, lines 17-22 * | 6 | |
| | GB - A - 423 457 (J.S. WITHERS)<br>* Page 1, lines 85-96 * | 6 | CATEGORY OF CITED DOCUMENTS |
| A | CH - A - 292 881 (ETAMPAGES AUTO-MATIQUES) | | X: particularly relevant<br>A: technological background<br>O: non-written disclosure<br>P: intermediate document<br>T: theory or principle underlying the invention<br>E: conflicting application |
| A | US - A - 4 101 302 (D.A. KROHN) | | D: document cited in the application |
| A | US - A - 3 494 326 (L.E. UPTON) | | L: citation for other reasons |
| | | | &: member of the same patent family.<br>corresponding document |

| | The present search report has been drawn up for all claims | |
|---|---|---|
| Place of search<br>The Hague | Date of completion of the search<br>14-02-1980 | Examiner<br>FRIDEN |

EPO Form 1503.1 06.78